# EUROPÄISCHE PATENTSCHRIFT

(11) **EP 4 092 256 B1**
(45) Veröffentlichungstag und Bekanntmachung des Hinweises auf die Patenterteilung: **28.02.2024**
(21) Anmeldenummer: 22173546.7
(22) Anmeldetag: 16.05.2022
(51) Int. Cl.: F01N 3/28, F01N 13/00, F01N 13/08

(54) **ABGASANLAGE EINER VERBRENNUNGSKRAFTMASCHINE**
EXHAUST GAS SYSTEM OF A COMBUSTION ENGINE
INSTALLATION DE GAZ D'ÉCHAPPEMENT D'UN MOTEUR À COMBUSTION INTERNE

(30) Priorität: 20.05.2021 DE 102021113203
(43) Veröffentlichungstag der Anmeldung: 23.11.2022
(73) Patentinhaber: VOLKSWAGEN AG, 38440 Wolfsburg (DE)
(72) Erfinder: Beer, Sascha, 38179 Schwülper (DE)
(74) Vertreter: Gulde & Partner

(56) Entgegenhaltungen:
- EP-A1- 3 767 086
- DE-A1-102013 007 523
- DE-A1-102018 203 936
- DE-A1-102018 220 131
- US-A1- 2007 204 597

## Beschreibung

Die Erfindung betrifft eine Abgasanlage einer Verbrennungskraftmaschine in einem Fahrzeug, die einen Abgaskanal und ein Abgasnachbehandlungssystem umfasst.

Der effiziente Betrieb und ein niedriger Schadstoffausstoß von Kraftfahrzeugen unterliegt einer stetigen Analyse und Betrachtung, um den Kraftstoffverbrauch sowie die Abgasemissionen zu reduzieren. Dabei werden sowohl die Rohemissionen durch innermotorische Maßnahmen und intelligente Motorsteuerungskonzepte als auch die in die Umwelt emittierten Emissionen durch verbesserte Abgasnachbehandlungssysteme signifikant reduziert. Ein wichtiger Bestandteil zum Erreichen dieses Ziels ist die Steuerung der Verbrennung in der Verbrennungskraftmaschine des Fahrzeugs. Während der Verbrennung des Luft-Kraftstoff-Gemischs entstehen als Nebenprodukte vorwiegend die Schadstoffe NOₓ, CO und HC. Die Mengen dieser Schadstoffe, die im Rohabgas enthalten sind, hängen stark vom Brennverfahren und Motorbetrieb ab. Eine Größe, die wesentlichen Einfluss auf die Bildung von Schadstoffen hat, ist die Luftzahl λ. Die korrekte Luftzahl - auch Lambdaverhältnis genannt - ist ein wichtiger Parameter zur Steuerung der Verbrennung und ferner ebenfalls zur Ermöglichung der Abgasreinigung durch Katalysatoren. Darüber hinaus gibt es weitere Kriterien, die die Luftzahl beeinflussen.

Im Falle eines Benzinmotors liegt definitionsgemäß eine Luftzahl gleich 1 vor, wenn die zugeführte Luftmasse genau der theoretisch erforderlichen Luftmasse zur vollständigen stöchiometrischen Verbrennung des zugeführten Kraftstoffs entspricht. In den meisten Betriebsbereichen werden Motoren mit stöchiometrischem Luft-Kraftstoff-Gemisch (λ = 1) betrieben. In diesem Fall kann beispielsweise ein Dreiwegekatalysator seine bestmögliche Reinigungswirkung entfalten. Eine Luftzahl, die kleiner als 1 ist, wird gewählt, um ein fettes Luft-Kraftstoff-Gemisch zu bilden. Dies erfolgt unter anderem um Bauteile im Abgassystem vor Übertemperatur z. B. bei langen Volllastfahrten zu schützen. Zuletzt ist die Wahl einer Luftzahl größer als 1 möglich. In diesem Bereich herrscht Luftüberschuss und es ergibt sich ein mageres Luft-Kraftstoff-Gemisch. Dieses wird zum Beispiel während des Kaltstarts gewählt, um die HC-Rohemissionen effektiv und schnell mit ausreichend Sauerstoff konvertieren zu können.

Dieselmotoren arbeiten mit Luftüberschuss. Daher kann der Dreiwegekatalysator nicht zur NOₓ-Reduktion eingesetzt werden, da im mageren Dieselabgas die HC- und CO-Emissionen am Katalysator bevorzugt mit dem Restsauerstoff aus dem Abgas und nicht mit NOₓ reagieren. Die Entfernung der HC- und CO-Emissionen aus dem Dieselabgas erfolgt durch einen Oxidationskatalysator. Die Entfernung der Stickoxide ist grundsätzlich möglich mit einem NOₓ-Speicherkatalysator oder einem SCR-Katalysator (Selective Catalytic Reduction). Die Entfernung von Rußpartikeln erfolgt mit Hilfe von Rußpartikelfiltern. Zur effizienten Nutzung dieser Maßnahmen wird zeitweise die Luftzahl variiert. Ein NOₓ-Speicherkatalysator lagert Stickoxide ein und muss daher nach einer bestimmten Zeit bzw. Aufnahmemenge regeneriert werden. Hierfür muss im Abgas Luftmangel herrschen, da als Reduktionsmittel die im Abgas vorhandenen Stoffe CO, H₂ und verschiedene Kohlenwasserstoffe dienen.

Offensichtlich werden die Schadstoffrohemission eines Motors ganz wesentlich durch das Luft-Kraftstoff-Verhältnis (Luftzahl λ) bestimmt. Daher kommt einer genauen und zuverlässigen Erfassung dieser Größe eine herausragende Bedeutung zu. Nur durch genaue Messung und Feststellung der Luftzahl, kann eine für den jeweiligen Betrieb notwendige Gemischbildung eingestellt werden.

Zu diesem Zweck finden Lambda-Sensoren - auch Lambdasonden genannt - Anwendung, bei denen zwischen Sprungsonden und linearen Sonden (Breitbandsonden) unterschieden wird. Die Sprungsonden ermöglichen eine Regelung des stöchiometrischen Kraftstoff-Luft-Verhältnisses um den mit einer Luftzahl gleich 1, da sie den Übergang von einem zum anderen Bereich feststellen. Breitbandsonden hingegen messen sowohl im fetten als auch mageren Bereich.

Die Lambdasonde misst den Restsauerstoffgehalt des Abgases und leitet den Wert in Form einer elektrischen Spannung an das Motorsteuergerät. Anhand der Lambdasonden-Spannung erkennt das Steuergerät die Gemisch-Zusammensetzung und kann das Verbrennungsluftverhältnis einstellen.

Lambdasonden können unterschiedlich aufgebaut sein. Gemein ist allen Ausführungen jedoch, dass sie von dem zu messenden Abgas umspült werden. Zum Schutz empfindlicher Elemente ist am Sondengehäuse abgasseitig ein Schutzrohr angebracht. Dieses schützt das Sensorelement vor Verbrennungsrückständen und Kondenswasser im Abgas. Für den Gaszutritt ist das Schutzrohr mit Löchern versehen. Dementsprechend ist es von großer Bedeutung, dass trotz des Schutzrohrs ausreichend Kontakt der Messelemente mit dem Abgas erfolgen kann.

Ferner kann für eine effiziente Abgasnachbehandlung wichtig sein, die Stickoxidemissionen zu überwachen. Dies kann durch NOₓ-Sensoren erfolgen. Diese dienen unter anderem der Regelung der eindosierten Harnstoffmenge in Systemen zur selektiven katalytischen Reduktion (SCR) zur NOₓ-Reduzierung sowie zur Überwachung (On-Board-Diagnose) der SCR-Komponenten. Der Sensor ermöglicht auch die Überwachung eines NOₓ-Speicherkatalysators. Auch NOₓ-Sensoren umfassen ein keramisches Sensorelement, das nach dem amperometrischen Doppelkammerprinzip arbeitet und durch ein Schutzrohr geschützt wird.

JP 2016-121652 A beschreibt einen Verbrennungsmotor mit angeschlossenem Abgaskrümmer. Ausgehend von dem Zylinderkopf sind die Abgaspfade der jeweiligen Zylinder über Öffnungen mit entsprechenden Abgasleitungen des Abgaskrümmers verbunden und münden schließlich in ein Abgassammelrohr des Krümmers, wo eine Lambdasonde angeordnet ist. Zwischen dem Abgaskrümmer und dem Zylinderkopf ist eine Dichtung angeordnet. Die Dichtung umfasst im Bereich der Abgaspfade Überstände, die in die Öffnungen ragen und das Abgas in Richtung der Lambdasonde lenken.

DE 37 43 295 C1 beschreibt ein Gaslenkblech, das in Strömungsrichtung eines Abgases vor einer Lambda-Sonde angeordnet ist. Dabei ist das Gaslenkblech derartig angeordnet, dass es einen Windschatten für die Lambda-Sonde erzeugt.

JP 2007-247560 A beschreibt einen Verbrennungsmotor mit einem Abgasturbolader. Zur Ladedruckregelung ist stromabwärts des Verbrennungsmotors und stromaufwärts der Turbine des Abgasturboladers ausgehend von einer Abgasleitung eine Bypassleitung (auch Wastegate genannt) angeordnet. Die Bypassleitung weist ein Bypassventil auf, das die Menge an Abgas, das der Turbine zugeführt wird, einstellt. Stromabwärts der Bypassleitung und stromaufwärts eines Abgaskatalysators ist des Weiteren ein Sensor angeordnet. Nach einem Kaltstart wird das Bypassventil geöffnet, um den Sensor schnell auf seine Betriebstemperatur aufzuheizen. Damit das Abgas den Sensor umströmt ist im stromabwärtigen Bereich der Bypassleitung ein Führungsmittel angeordnet. Dabei handelt es sich um Lamellen, die an dem Bypassventil angeordnet sind. Alternativ werden die Führungsmittel durch die konvexe Form des Abgaskanals nachempfunden, der mit anderen Worten an der besagten Stelle verengt wird. Die Führungsmittel entfalten ihre Wirkung, wenn das Bypassventil geöffnet ist, sodass die Strömung die Stelle passiert, an der die Führungsmittel vorliegen.

DE 10 2018 203936 A1 beschreibt eine Abgasanlage umfassend einen Sensor zur Bestimmung der Abgaszusammensetzung. Ein stromaufwärts des Sensors angeordnetes Abgasleitelement dient der Umlenkung von Abgas in Richtung des Sensors, wobei das Abgasleitelement in Abhängigkeit der richtungsabhängigen Anströmung durch das Abgasverstellbar ist.

DE 10 2013 007523 A1 beschreibt eine Abgasanlage, die ein von Abgas einer Verbrennungskraftmaschine durchströmbares Leitungselement umfasst. Das Leitungselement umfasst einen Rußsensor, wobei stromaufwärts des Rußsensors ein Leitblech angeordnet ist.

US 2007/204597 A1 beschreibt einen Abgassensor-Montageaufbau mit einer sich ausgehend von einem Dieselpartikelfilter verjüngenden Abgasleitung, die stromabwärts einen konstanten Querschnitt aufweist. In der Abgasleitung mit konstantem Querschnitt ist ein Abgassensor sowie ein Führungselement angeordnet. Der gesamte Bereich des Führungselements verläuft innerhalb des Abschnitts der Abgasleitung mit konstantem Querschnitt parallel zu demselben und weist folglich dort einen konstanten Querschnitt auf.

EP 3 767 086 A1 beschreibt einen (Stickoxid-)Sensor, der innerhalb einer Leitung eines Abgassystems eines Motors angeordnet ist. Der Sensor umfasst benachbarte Ablenk- bzw. Deflektorplatten.

DE 10 2018 220131 A1 beschreibt ein Abgasventil, das die Öffnung eines Abgasströmungspfads einstellt und an einem Verbindungsrohr auf einer stromabwärts gelegenen Seite eines ersten Abgassensors angeordnet ist.

Ferner finden Konzepte Anwendung, die zur Gewährleistung ausreichender Strömungsgeschwindigkeiten des Abgases an einer Lambdasonde - insbesondere während des Betriebs in Teillastbereichen - auf einer Verringerung des Strömungsquerschnitts basieren. Dies erfolgt durch eine Einschnürung bzw. Querschnittsreduzierung des Abgaskanals im Bereich einer Lambdasonde. Hierdurch steigt jedoch aufgrund des erhöhten Strömungswiderstands der Abgasgegendruck.

Der Erfindung liegt nun die Aufgabe zugrunde, eine Abgasanlage für eine Verbrennungskraftmaschine eines Fahrzeugs bereitzustellen, die die genannten Nachteile des Stands der Technik zumindest teilweise überwindet und sicherstellt, dass Gassensoren zur Bestimmung der Gaszusammensetzung, die in der Abgasanlagen Anwendung finden, genaue und zuverlässige Messwerte bereitstellen.

Diese Aufgabe wird durch eine Abgasanlage mit den Merkmalen des unabhängigen Anspruchs gelöst. Vorteilhafte Ausgestaltungen der Erfindung sind in den Unteransprüchen definiert.

Die erfindungsgemäße Abgasanlage für eine Verbrennungskraftmaschine eines Fahrzeugs umfasst einen Abgaskanal und ein Abgasnachbehandlungssystem, wobei in dem Abgaskanal mindestens ein Sensor zur Bestimmung der Abgaszusammensetzung angeordnet ist. Weiterhin ist stromaufwärts des Sensors eine Leitschaufel angeordnet, wobei die Leitschaufel ausgebildet ist, die Strömungsgeschwindigkeit des Abgases in einem lokalen Strömungsquerschnitt des Abgaskanals auf Höhe des Sensors zu erhöhen.

Durch die Erhöhung der Strömungsgeschwindigkeit des Abgases erfährt das Abgas eine Beschleunigung. Insbesondere steigt durch die erfindungsgemäße Abgasanlage die Strömungsgeschwindigkeit des Abgases in einem lokalen Strömungsquerschnitt des Abgaskanals auf Höhe des Sensors. Wie eingangs erläutert, umfassen Sensoren zur Bestimmung der Abgaszusammensetzung, die im Abgasstrom angeordnet sind, Schutzrohre, die die Sensoren vor Verbrennungsrückständen und Wasserschlag schützen sollen. Die Schutzrohre weisen Öffnungen auf, durch die ein Eintritt des Abgases in die Schutzrohre ermöglicht wird. Demzufolge ist eine ausreichend hohe Strömungsgeschwindigkeit des Abgases an dem Schutzrohr der Sensoren wünschenswert. Die Austauschgeschwindigkeit des Gases hängt in hohem Maße von der genannten Strömungsgeschwindigkeit ab. Durch höhere Strömungsgeschwindigkeiten wird ein Eintreten des Abgases in das Messvolumen, das durch das Schutzrohr der Sensoren gebildet wird, erhöht und ersetzt Abgas, das sich bereits für eine gewisse Verweilzeit in dem Volumen befindet. Dieser Austausch wirkt sich auch unmittelbar auf das Messelement der Sensoren aus, da hierdurch die Ansprechzeit der Sensoren verkürzt wird.

Infolgedessen werden unter anderem direkte Strömungswege sichergestellt und ein verstärkter Impulsaustausch der Gasmoleküle gefördert. Es wird eine schnelle und intensive Vermischung von frisch zuströmendem Abgas mit Abgas, was sich bereits innerhalb des Schutzrohrs des Sensors befindet, ermöglicht. Somit wird eine verbesserte Durchströmung des Schutzrohrs sichergestellt und ferner wird die Verweilzeit von Abgas in dem Schutzrohr verringert. Die Messgenauigkeit und Zuverlässigkeit des Sensors werden dadurch verbessert.

Demzufolge wird eine ausreichende hohe Strömungsgeschwindigkeit des Abgases, das die Sensoren umströmt und mit diesen in Kontakt ist, sichergestellt. Dabei ist jedoch zu berücksichtigen, dass zu diesem Zweck eine Erhöhung der Strömungsgeschwindigkeit ausschließlich für den beschriebenen, lokalen Bereich um den Sensor ausreichend und ferner auch erwünscht ist. Eine Erhöhung der Strömungsgeschwindigkeit des Abgases in weitergehenden Bereichen des Abgaskanals, in denen das Abgas keinen Einfluss auf die Sensorik und Messgenauigkeit des Sensors nimmt, trägt somit nicht zur Lösung der Aufgabe bei und bewirkt allerdings durch einen Anstieg des Strömungswiderstands einen erhöhten Abgasgegendruck.

Erfindungsgemäß erfolgt die Anordnung der Leitschaufel stromaufwärts des Sensors. Ferner ist die Leitschaufel ausgebildet, die Strömungsgeschwindigkeit des Abgases in einem lokalen Strömungsquerschnitt des Abgaskanals auf Höhe des Sensors zu erhöhen. Hierdurch wird gewährleistet, dass die Strömungsgeschwindigkeit des Abgases, das den Sensor umströmt und mit diesem in Kontakt steht, ausreichende hohe Werte annimmt. Demzufolge wird erreicht, dass der Sensor genaue und zuverlässige Messwerte bereitstellt. Durch die Leitschaufel wird die im Abgas, das die Leitschaufel überströmt, enthaltene Enthalpie entweder ganz oder zum Teil in Strömungsenergie umgesetzt. Die Kraft zur Beschleunigung der Fluidteilchen, die Druckgradientkraft und deren Arbeit führt zur Zunahme der kinetischen Energie der Fluidteilchen. Mit anderen Worten erfährt das Abgas durch die Energieumwandlung eine Beschleunigung. Aufgrund der Anordnung der Leitschaufel stromaufwärts des Sensors und seine entsprechende Ausbildung wird somit die Strömungsgeschwindigkeit des Abgases im Abgaskanal auf Höhe des Sensors erhöht. Gleichzeitig wird durch diese lokale Beschränkung der Beeinflussung des Strömungsfelds des Abgases erreicht, dass der Abgasgegendruck nur in geringem Maß beeinflusst wird. Insbesondere erfolgt diese Beeinflussung ausschließlich dort, wo die Abgasströmung Einfluss auf die Messung nimmt. Andere Bereiche bleiben unbeeinflusst.

In bevorzugter Ausgestaltung der Erfindung ist vorgesehen, dass der Strömungsquerschnitt des Abgaskanals auf Höhe des Sensors konstant ist. In Verbindung mit einer erfindungsgemäßen Leitschaufel können somit im Stand der Technik übliche Einschnürungen im Bereich des Sensors vermieden werden. Neben der effizienten Strömungsbeeinflussung, die sich durch niedrigen Abgasgegendruck auszeichnet, wird hierdurch auch eine platzsparende Lösung ermöglicht, die darüber hinaus konstruktive Anpassungen eines gesamten Abschnitts des Abgaskanals überflüssig machen und daher auch eine wirtschaftlich kostengünstigere Lösung darstellen.

Gemäß einer bevorzugten Ausführung der Erfindung ist der Sensor zur Bestimmung der Abgaszusammensetzung eine Lambdasonde. In weiterer bevorzugter Ausgestaltung der Erfindung ist vorgesehen, dass der Sensor zur Bestimmung der Abgaszusammensetzung ein NOₓ-Sensor ist. Beiden Sensortypen ist gemein, dass sie empfindliche Messelemente umfassen, die besonderen Schutz benötigen, der durch Schutzrohre bereitgestellt wird. In Verbindung mit der erfindungsgemäßen Abgasanlage ermöglichen diese Sensoren einen optimierten Betrieb der Verbrennungskraftmaschine, der durch eine genaue und zuverlässige Messung aufgrund der ausreichenden hohen Strömungsgeschwindigkeiten sichergestellt wird. Gleichzeitig sind die Sensoren durch ihren Aufbau stets geschützt und weisen so eine erhöhte Lebensdauer auf, ohne sich negativ auf ihre Genauigkeit auszuwirken.

In einer vorteilhaften Ausführung der Erfindung ist vorgesehen, dass die Leitschaufel ausgebildet ist, die Strömungsgeschwindigkeit des Abgases auf Höhe des Sensors auf mindestens 5 m/s zu erhöhen, insbesondere auf mindestens 7 m/s, vorzugsweise auf mindestens 10 m/s. Es hat sich gezeigt, dass sich durch Strömungsgeschwindigkeiten ab einem Wert von 5 m/s und oberhalb dieses Werts das Messverhalten der Sensoren im Sinne einer hohen Messgenauigkeit und einem schnellen Ansprechverhalten in besonderem Maße positiv beeinflussen lässt.

Erfindungsgemäß kann durch Neigen oder Aufrichten der Leitschaufel ein Winkel zwischen der Leitschaufel und dem Abgaskanal variabel verstellt werden. Durch diese Ausführung ist es möglich, das tatsächliche Strömungsverhalten zu berücksichtigen. Eine Anpassung dieses Winkels übt Einfluss auf das Ausmaß der Druckgradientenkraft, die zur Zunahme der kinetischen Energie der Fluidteilchen des Abgases führt, aus. Ein möglicher verstellbarer Winkel ist der Winkel, der zwischen einer in Strömungsrichtung des Abgases überströmten Oberfläche der Leitschaufel, die dem Sensor abgewandt ist, und einer Oberfläche des Abgaskanals, die der überströmten Oberfläche der Leitschaufel ebenfalls abgewandt ist, vorliegt. Somit können verschiedene Anteile der im Abgas enthaltenen Enthalpie in Strömungsenergie umgesetzt werden. Demzufolge kann auch auf Teillastbereiche der Verbrennungskraftmaschine reagiert werden. Somit kann stets in Abhängigkeit eines Betriebspunkts eine ideale Strömungsgeschwindigkeit des Abgases in dem lokalen Strömungsquerschnitt des Abgaskanals auf Höhe des Sensors eingestellt werden.

In der erfindungsgemäßen Abgasanlage erfolgt die Verstellung des Winkels zwischen der Leitschaufel und dem Abgaskanal in Abhängigkeit einer aktuellen Strömungsgeschwindigkeit des Abgases stromaufwärts des Sensors. Dadurch lässt sich sehr genau und konkret feststellen, ob das Abgas eine ausreichende hohe Strömungsgeschwindigkeit aufweist, damit der Sensor zuverlässige Messwerte feststellt. Liegt eine zu geringe Strömungsgeschwindigkeit vor, lässt sich durch Vergrößern des Winkels eine fortschreitende Beschleunigung des Abgases erzielen, sodass bei Umströmung des Sensors eine geeignete Strömungsgeschwindigkeit des Abgases vorliegt. Umgekehrt lässt sich der Winkel im Fall einer ausreichend hohen bzw. zu hohen Strömungsgeschwindigkeit des Abgases verringern. Demzufolge kann der Druckverlust auf einen Minimalwert, der durch die mindestens notwendige Strömungsgeschwindigkeit des Abgases auf Höhe des Sensors definiert ist, reduziert werden.

Die Strömungsgeschwindigkeit wird erfindungsgemäß über ein Modell errechnet oder durch ein Durchflussmessgerät gemessen. In beiden Fällen ist es möglich, genaue Aussagen zu der Strömungsgeschwindigkeit des Abgases stromaufwärts des Sensors zu treffen.

Alternativ kann die Verstellung des Winkels zwischen der Leitschaufel und dem Abgaskanal in Abhängigkeit einer Plausibilitätsprüfung bestimmt werden. Dabei wird unter anderem das Lambdasondensignal bzw. die von der Lambdasonde stammenden Messwerte auf Plausibilität überprüft. Werden Werte festgestellt, die Plausibilitätskriterien nicht erfüllen, beispielsweise, da sie aus einem Toleranzbereich eines zu erwartenden Messbereichs fallen, der anhand eines Modells ermittelt wird, kann darauf basierend die Verstellung des Winkels zwischen der Leitschaufel und dem Abgaskanal erfolgen. Bevorzugt kann zusätzlich eine OSC-Messung des Abgaskatalysators erfolgen, anhand derer die Sauerstoffspeicherfähigkeit des Abgaskatalysators geprüft wird. Messwerte der Lambdasonde werden durch die Sauerstoffspeicherfähigkeit des Abgaskatalysators beeinflusst, sodass auch anhand der OSC-Messung eine Aussage zur Plausibilität der Messwerte unternommen werden kann.

Gemäß einer bevorzugten Ausführung der Erfindung ragen zwei sich in Strömungsrichtung erstreckende Seitenkanten der Leitschaufel in Richtung der Mittelachse vor und eine vom Abgas überströmte Oberfläche der Leitschaufel ist rinnenförmig geformt. Durch eine solche Oberflächenform wird das Anströmprofil des Abgasstroms noch weiter optimiert und die Anströmgeschwindigkeit am Sensor noch weiter erhöht.

In einer weiteren vorteilhaften Ausführung der erfindungsgemäßen Abgasanlage ist vorgesehen, dass eine sich entlang der Strömungsrichtung erstreckende, vom Abgas überströmte Oberfläche der Leitschaufel in Strömungsrichtung des Abgases rampenartig und in Richtung der Mittelachse des Abgaskanals ansteigt. Hierdurch wird eine Leitschaufel mit einer Oberflächenform bereitgestellt, die die Beschleunigung des Abgases noch weiter verbessert.

Die beiden zuvor genannten Ausführen lassen sich besonders vorteilhaft miteinander kombinieren. Das Strömungsfeld in dem zumeist rohrförmigen Abgaskanal kann hierdurch besonders effektiv beeinflusst werden, da die Strömung in mehreren Dimensionsachsen beeinflusst werden kann, wobei es sich zumindest um eine Achse entlang der Strömungsrichtung des Abgases und zum anderen eine Dimensionsachse senkrecht zu der Strömungsrichtung handelt.

Bevorzugt ist die Leitschaufel mit dem Abgaskanal form- oder stoffschlüssig verbunden. Dadurch können diverse geeignete Maßnahmen zur Befestigung eingesetzt werden und der Einsatzort der Leitschaufel ist flexibel wählbar. Ferner handelt es sich um bauraumsparende Mechanismen, die sich geeignet nach dem Einsatzort der Sensoren richten können und entkoppelt von anderen Komponenten der Abgasanlage sind.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine Abgasanlage gemäß Stand der Technik in schematischer Ansicht,
- Figur 2: einen erfindungsgemäßen Systemaufbau gemäß einer Ausführung der Erfindung,
- Figur 3: eine Seitenansicht eines Abgaskanalabschnitts gemäß der in Figur 2 dargestellten Ausführung der Erfindung,
- Figur 4: eine Sicht auf die Oberseite der Leitschaufel und der Lambdasonde eines Abgaskanalabschnitts gemäß der in Figur 2 dargestellten Ausführung der Erfindung.

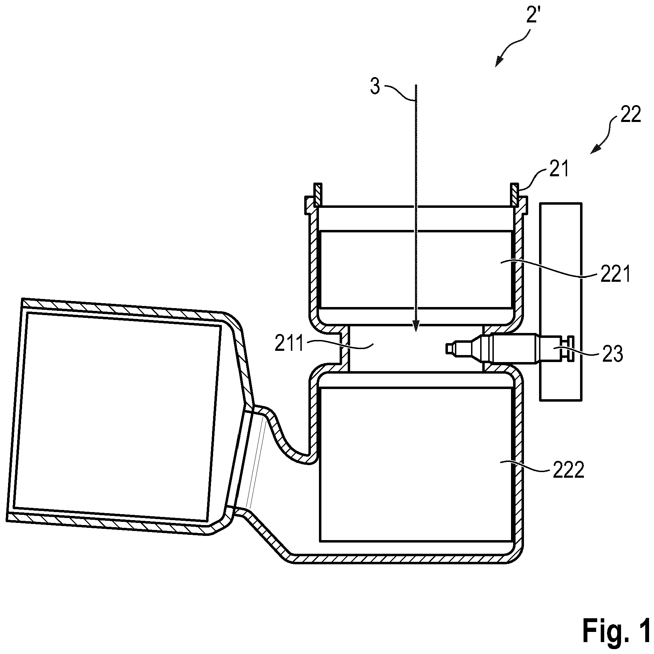

Figur 1 zeigt eine Abgasanlage 2' gemäß Stand der Technik, die einer nicht weiter dargestellten Verbrennungskraftmaschine eines ebenfalls nicht gezeigten Fahrzeugs nachgeordnet ist. Die Verbindung mit der Verbrennungskraftmaschine erfolgt über eine Abgaskanal 21. Stromabwärts der Verbrennungskraftmaschine ist ein erster Katalysator 221 angeordnet. Diesem nachgeordnet ist eine Lambdasonde 23, deren Messkopf in den Abgaskanal 21 ragt, wodurch dieser durch das Abgas 3 (dargestellt durch einen Pfeil, der zugleich die Strömungsrichtung des Abgases darstellt) umströmt wird und die Restsauerstoff-Konzentration im Abgas 3 misst. Ebenfalls stromabwärts des ersten Katalysators 221, ist ein zweiter Katalysator 222 angeordnet. Die Katalysatoren 221, 222 dienen der Reduzierung der Abgasemissionen und sind Teil des Abgasnachbehandlungssystems 22. Sämtliche erwähnte Komponenten, die Abgas 3 führen, sind über einen nicht weiter unterteilten Abgaskanal 21 miteinander strömungstechnisch verbunden.

Gemäß dem Stand der Technik weist der Abschnitt 211 des Abgaskanals 21, der zwischen den Katalysatoren 221 und 222 liegt und in dem die Lambdasonde 23 angeordnet ist, einen verringerten Strömungsquerschnitt auf. Dies erfolgt mit dem Ziel, die Strömungsgeschwindigkeit des Abgases 3 in dem eingeschnürten Abschnitt 211 des Abgaskanals 21 zu erhöhen, damit die dort angeordnete Lambdasonde 23 verlässliche Messwerte über die Sauerstoffkonzentration im Abgas 3 bereitstellt. Diese Strömungsbeeinflussung wirkt sich jedoch auf den gesamten Bereich innerhalb dieses Abschnitts 211 des Abgaskanals 21 aus. Demzufolge steigt auch der Strömungswiderstand, was in einem erhöhten Druckverlust und somit in einem steigenden Abgasgegendruck resultiert.

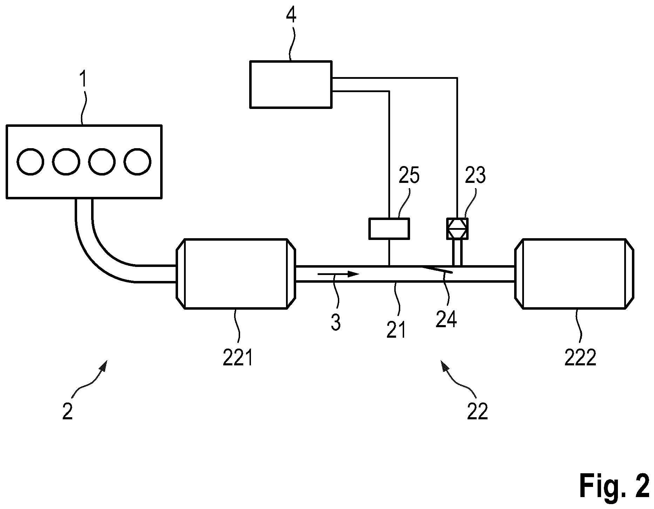

Figur 2 zeigt einen erfindungsgemäßen Systemaufbau gemäß einer Ausführung der vorliegenden Erfindung. Dargestellt ist eine Abgasanlage 2, die einer Verbrennungskraftmaschine 1 eines nicht gezeigten Fahrzeugs nachgeordnet ist. Stromabwärts der Verbrennungskraftmaschine 1 ist ein erster Katalysator 221, der in diesem Beispiel als Dreiwegekatalysator ausgestaltet ist, angeordnet. Diesem nachgeordnet ist ein Durchflussmessgerät 25 zur Messung des Abgasmassenstroms. Dem Durchflussmessgerät 25 nachfolgend ist eine Lambdasonde 23 angeordnet, die in den Abgaskanal 21 ragt, wodurch die Lambdasonde 23 durch das Abgas 3 (dargestellt durch einen Pfeil, der zugleich die Strömungsrichtung des Abgases darstellt) umströmt wird und die Restsauerstoff-Konzentration im Abgas 3 misst. Stromab der Lambdasonde 23 ist ein zweiter Katalysator 222 angeordnet, der in diesem Beispiel auch als Dreiwegekatalysator ausgestaltet ist. Das Abgasnachbehandlungssystem 22 umfasst die Katalysatoren, die der Reduzierung der Abgasemissionen dienen. Sämtliche erwähnte Komponenten, die Abgas 3 führen, sind über einen nicht weiter unterteilten Abgaskanal 21 miteinander strömungstechnisch verbunden.

Weiterhin ist stromaufwärts der Lambdasonde 23 eine Leitschaufel 24 angeordnet. Dabei ist die Leitschaufel 24 ausgebildet, die Strömungsgeschwindigkeit des Abgases in einem lokalen Strömungsquerschnitt des Abgaskanals 21 auf Höhe des Sensors zu erhöhen. Dabei bleibt der Strömungsquerschnitt des vom Abgas 3 durchströmten Abgaskanals 21 im Bereich der Lambdasonde 23 konstant. Es erfolgt keine Einschnürung im Bereich der Lambdasonde 23.

Außerdem umfasst das Fahrzeug einen Bordcomputer bzw. ein Motorsteuergerät 4. Dieses dient unter anderem zur Aufbereitung und Auswertung der Signale, die unter anderem von der Lambdasonde 23 und dem Durchflussmessgerät 25 übermittelt werden.

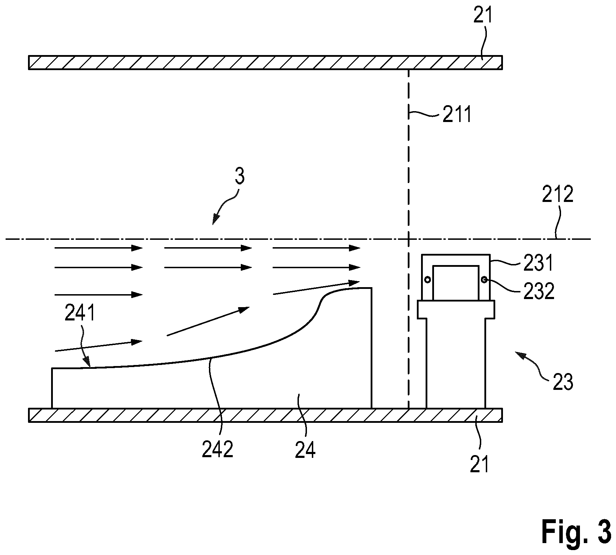

Die Figur 3 zeigt eine Seitenansicht eines Abgaskanalabschnitts des Abgaskanals 21 gemäß der in Figur 2 dargestellten Ausführung der Erfindung. Es handelt sich um den Abgaskanalabschnitt, an dem die Lambdasonde 23 angeordnet ist. Zum Schutz empfindlicher Elemente ist am Sondengehäuse abgasseitig ein Schutzrohr 231 angebracht. Dieses schützt das nicht weiter dargestellte Sensorelement vor festen Verbrennungsrückständen und Kondenswasser im Abgas 3. Für den Gaszutritt verfügt das Schutzrohr 231 über Eintrittslöcher 232.

Stromaufwärts der Lambdasonde 23 ist die Leitschaufel 24 angeordnet, die mit dem Abgaskanal 21 verbunden ist, wobei sie unmittelbar an der Kanalwand befestigt ist. Zwei sich in Strömungsrichtung erstreckende Seitenkanten 242 der Leitschaufel ragen in Richtung der Mittelachse 212 vor. Eine vom Abgas 3 überströmte Oberfläche 241 der Leitschaufel 24 ist dabei rinnenförmig geformt. Mit anderen Worten liegt eine Wölbung der überströmten Oberfläche 241 vor, die bei einer in Strömungsrichtung des Abgases 3 gerichteten Perspektive rinnenförmig ist. Weiterhin steigt die sich entlang der Strömungsrichtung erstreckende vom Abgas 3 überströmte Oberfläche 241 der Leitschaufel 24 in Strömungsrichtung des Abgases 3 rampenartig und in Richtung der Mittelachse 212 des Abgaskanals 21 an. Mit anderen Worten nimmt der Abstand zwischen der Mittelachse 212 und der überströmten Oberfläche 241 in Strömungsrichtung ab. Bevorzugt steigt die Oberfläche 241 dabei derartig an, dass sei eine Wölbung aufweist, die einer konkaven Form nahe kommt.

Durch die Leitschaufel 24 erfährt das durch Pfeile veranschaulichte Abgas 3 eine Beschleunigung, die sich lokal nur auf die Strömungsgeschwindigkeit des Abgases 3 auf Höhe der Lambdasonde 23 beschränkt. Hierdurch wird ein Zutritt des Abgases durch die Löcher 232 des Schutzrohrs 231 der Lambdasonde 23 in das Messvolumen begünstigt. Dennoch bleibt der Strömungsquerschnitt 211 des Abgaskanals 21 unverändert, sodass der Abgasgegendruck nicht in Folge einer Einschnürung des Abgaskanals 21 steigt. Zusätzlich sind keine konstruktiven und teuren Maßnahmen zur Veränderung der Abgaskanalgeometrie notwendig.

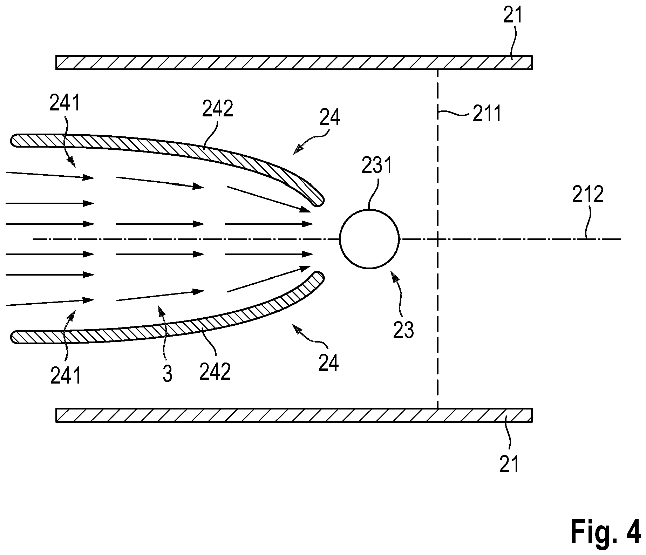

Figur 4 zeigt eine Sicht auf die Oberseite der Lambdasonde 23 und der Leitschaufel 24 des Abgaskanalabschnitts gemäß Figur 2. Die Perspektive auf den Abgaskanalabschnitt wurde folglich gegenüber der Ansicht in Figur 3 um 90° um die Mittelachse 212 rotiert, sodass nun eine Ansicht auf die Oberseite der Lambdasonde 23 und die Leitschaufel 24 dargestellt ist. Durch die beschriebene Oberfläche 241 wird eine wesentliche Umlenkung des Abgases 3 bewirkt. Zusammengenommen verursachen folglich sowohl die vorragenden Seitenkanten 242 der Leitschaufel 24, die rinnenförmige ausgebildete Oberfläche 241 und deren rampenartiger Anstieg eine Umlenkung des Abgases in mehreren Richtungsachsen, sodass eine besonders ausgeprägte Beschleunigung erfolgen kann.

Erfindungsgemäß ist die Leitschaufel 24 verstellbar, sodass unter anderem ein Winkel zwischen der in Figur 4 der Lambdasonde 23 abgewandten Fläche der Leitschaufel 24 und einer dieser Fläche zugewandten Fläche des Abgaskanals 21 variiert werden kann. Dadurch kann die Stärke der Beschleunigung und somit die Strömungsgeschwindigkeit des Abgases 3 auf Höhe der Lambdasonde angepasst werden. Dies ermöglicht es, auf verschiede Betriebszustände optimal zu reagieren und demzufolge einen minimalen Druckverlust bei gleichzeitig ausreichend hoher Strömungsgeschwindigkeit zuzulassen. Die Einstellung kann durch ein Motorsteuergerät 4 vorgegeben werden, wobei eine mit dem Durchflussmessgerät 25 stromaufwärts der Lambdasonde 23 gemessene Strömungsgeschwindigkeit als Berechnungsgrundlage dient. Alternativ könnte auf ein Durchflussmessgerät verzichtet werden und die Strömungsgeschwindigkeit anhand eines Modells ermittelt werden. Das Motorsteuergerät 4 modelliert üblicherweise die Luftmenge, anhand derer die Strömungsgeschwindigkeit des Abgases 3 berechnet werden könnte.

### Bezugszeichenliste

- 1: Verbrennungskraftmaschine
- 2: Abgasanlage
- 2': Abgasanlage gemäß Stand der Technik
- 21: Abgaskanal
- 211: Strömungsquerschnitt
- 212: Mittelachse
- 22: Abgasnachbehandlungssystem
- 221: erster Katalysator
- 222: zweiter Katalysator
- 23: Lambdasonde
- 231: Schutzrohr
- 232: Eintrittslöcher
- 24: Leitschaufel
- 241: Oberfläche
- 242: Kante
- 25: Durchflussmessgerät
- 3: Abgas
- 4: Motorsteuergerät

## Patentansprüche

1. Abgasanlage (2) für eine Verbrennungskraftmaschine (1) eines Fahrzeugs, umfassend einen Abgaskanal (21) und ein Abgasnachbehandlungssystem (22), wobei in dem Abgaskanal (21) mindestens ein Sensor (23) zur Bestimmung der Abgaszusammensetzung angeordnet ist, wobei stromaufwärts des Sensors (23) eine Leitschaufel (24) angeordnet ist, die ausgebildet ist, die Strömungsgeschwindigkeit des Abgases (3) in einem lokalen Strömungsquerschnitt (211) des Abgaskanals (21) auf Höhe des Sensors (23) zu erhöhen, wobei durch Neigen oder Aufrichten der Leitschaufel (24) ein Winkel zwischen der Leitschaufel (24) und dem Abgaskanal (21) variabel verstellbar ist, wobei die Verstellung des Winkels zwischen der Leitschaufel (24) und dem Abgaskanal (21) in Abhängigkeit einer Strömungsgeschwindigkeit des Abgases (3) auf Höhe des Sensors (23) erfolgt, wobei die Strömungsgeschwindigkeit über ein Modell errechnet oder durch ein Durchflussmessgerät (25) gemessen wird.

2. Abgasanlage (2) nach Anspruch 1, **dadurch gekennzeichnet, dass** der Strömungsquerschnitt (211) des Abgaskanals (21) auf Höhe des Sensors (23) konstant ist.

3. Abgasanlage (2) nach einem der vorhergehenden Ansprüche, **dadurch gekennzeichnet, dass** der mindestens eine Sensor (23) zur Bestimmung der Abgaszusammensetzung eine Lambdasonde und/oder ein NOₓ-Sensor ist.

4. Abgasanlage (2) nach einem der vorherigen Ansprüche, **dadurch gekennzeichnet, dass** die Leitschaufel (24) ausgebildet ist, die Strömungsgeschwindigkeit des Abgases (3) auf Höhe des Sensors (23) auf mindestens 5 m/s zu erhöhen.

5. Abgasanlage (2) nach einem der vorhergehenden Ansprüche, **dadurch gekennzeichnet, dass** eine sich entlang der Strömungsrichtung erstreckende vom Abgas (3) überströmte Oberfläche (241) der Leitschaufel (24) in Strömungsrichtung des Abgases (3) rampenartig und in Richtung der Mittelachse (212) des Abgaskanals (21) ansteigt.

6. Abgasanlage (2) nach einem der vorhergehenden Ansprüche, **dadurch gekennzeichnet, dass** zwei sich in Strömungsrichtung erstreckende Seitenkanten (242) der Leitschaufel in Richtung der Mittelachse (212) des Abgaskanals vorragen und eine vom Abgas (3) überströmte Oberfläche (241) der Leitschaufel (24) rinnenförmig geformt ist.

7. Abgasanlage (2) nach einem der vorhergehenden Ansprüche, **dadurch gekennzeichnet, dass** die Leitschaufel (24) mit dem Abgaskanal (21) form- oder stoffschlüssig verbunden ist.

## Claims

1. Exhaust system (2) for an internal combustion engine (1) of a vehicle, the exhaust system comprising an exhaust gas channel (21) and an exhaust gas aftertreatment system (22), wherein at least one sensor (23) for determining the exhaust gas composition is arranged in the exhaust gas channel (21), wherein a guide vane (24) is arranged upstream of the sensor (23), which guide vane is designed to increase the flow velocity of the exhaust gas (3) in a local flow cross section (211) of the exhaust gas channel (21) at the sensor (23), wherein an angle between the guide vane (24) and the exhaust channel (21) can be variably adjusted by tilting or straightening the guide vane (24), wherein the angle between the guide vane (24) and the exhaust channel (21) is adjusted depending on a flow velocity of the exhaust gas (3) at the sensor (23), wherein the flow velocity is calculated via a model or measured by a flowmeter (25).

2. Exhaust system (2) according to claim 1, **characterized in that** the flow cross section (211) of the exhaust gas channel (21) is constant at the sensor (23).

3. Exhaust system (2) according to either of the preceding claims, **characterized in that** the at least one sensor (23) for determining the exhaust gas composition is a lambda sensor and/or an NOₓ sensor.

4. Exhaust system (2) according to any of the preceding claims, **characterized in that** the guide vane (24) is designed to increase the flow velocity of the exhaust gas (3) at the sensor (23) to at least 5 m/s.

5. Exhaust system (2) according to any of the preceding claims, **characterized in that** a surface (241) of the guide vane (24), which extends in the flow direction and over which the exhaust gas (3) flows, rises like a ramp in the flow direction of the exhaust gas (3) and in the direction of the central axis (212) of the exhaust gas channel (21).

6. Exhaust system (2) according to any of the preceding claims, **characterized in that** two side edges (242) of the guide vane, which extend in the flow direction, project in the direction of the central axis (212) of the exhaust gas channel, and a surface (241) of the guide vane (24), over which the exhaust gas (3) flows, is groove-shaped.

7. Exhaust system (2) according to any of the preceding claims, **characterized in that** the guide vane (24) is form-fittingly or integrally connected to the exhaust gas channel (21).

## Revendications

1. Installation pour gaz d'échappement (2) destinée à un moteur à combustion interne (1) d'un véhicule, comprenant un canal pour gaz d'échappement (21) et un système de post-traitement des gaz d'échappement (22), dans laquelle au moins un capteur (23) permettant de déterminer la composition des gaz d'échappement est disposé dans le canal pour gaz d'échappement (21), dans laquelle une aube directrice (24) est disposée en amont du capteur (23), laquelle est conçue pour augmenter la vitesse d'écoulement des gaz d'échappement (3) dans une section transversale d'écoulement (211) locale du canal pour gaz d'échappement (21) à hauteur du capteur (23), dans laquelle un angle entre l'aube directrice (24) et le canal pour gaz d'échappement (21) peut être réglé de manière variable par inclinaison ou redressement de l'aube directrice (24), dans laquelle le réglage de l'angle entre l'aube directrice (24) et le canal pour gaz d'échappement (21) est effectué en fonction d'une vitesse d'écoulement des gaz d'échappement (3) à hauteur du capteur (23), dans laquelle la vitesse d'écoulement est calculée par l'intermédiaire d'un modèle ou mesurée par un appareil de mesure de débit (25).

2. Installation pour gaz d'échappement (2) selon la revendication 1, **caractérisée en ce que** la section transversale d'écoulement (211) du canal pour gaz d'échappement (21) est constante à hauteur du capteur (23).

3. Installation pour gaz d'échappement (2) selon l'une des revendications précédentes, **caractérisée en ce que** l'au moins un capteur (23) permettant de déterminer la composition des gaz d'échappement est une sonde lambda et/ou un capteur NOₓ.

4. Installation pour gaz d'échappement (2) selon l'une des revendications précédentes, **caractérisée en ce que** l'aube directrice (24) est conçue pour augmenter la vitesse d'écoulement des gaz d'échappement (3) à au moins 5 m/s à hauteur du capteur (23).

5. Installation pour gaz d'échappement (2) selon l'une des revendications précédentes, **caractérisée en ce qu'**une surface (241) de l'aube directrice (24), laquelle surface s'étend le long du sens d'écoulement et est submergée par les gaz d'échappement (3), s'élève à la manière d'une rampe dans le sens d'écoulement des gaz d'échappement (3) et en direction de l'axe central (212) du canal pour gaz d'échappement (21).

6. Installation pour gaz d'échappement (2) selon l'une des revendications précédentes, **caractérisée en ce que** deux bords latéraux (242) de l'aube directrice, lesquels s'étendent dans le sens d'écoulement, font saillie en direction de l'axe central (212) du canal pour gaz d'échappement et une surface (241) de l'aube directrice (24) qui est submergée par les gaz d'échappement (3) est façonnée sous forme de gouttière.

7. Installation pour gaz d'échappement (2) selon l'une des revendications précédentes, **caractérisée en ce que** l'aube directrice (24) est raccordée au canal pour gaz d'échappement (21) par complémentarité de forme ou par liaison de matière.
